Europäisches Patentamt

(19) European Patent Office

Office européen des brevets

(11) Publication number: **0 021 669**
**B1**

(12) **EUROPEAN PATENT SPECIFICATION**

(45) Date of publication of patent specification: **30.11.83**

(21) Application number: **80301888.6**

(22) Date of filing: **06.06.80**

(51) Int. Cl.³: **B 29 C 17/03**, B 29 C 1/16, G 01 F 3/26

(54) Apparatus and method for preparing flexible diaphragms.

(30) Priority: **07.06.79 JP 71771/79**

(43) Date of publication of application:
**07.01.81 Bulletin 81/1**

(45) Publication of the grant of the patent:
**30.11.83 Bulletin 83/48**

(84) Designated Contracting States:
**DE FR GB IT SE**

(56) References cited:
**BE - A - 804 793**
**DE - C - 387 306**
**FR - A - 1 204 928**
**FR - A - 1 332 027**
**FR - A - 1 557 352**
**GB - A - 994 124**
**GB - A - 1 005 951**
**US - A - 1 480 191**
**US - A - 3 118 960**
**US - A - 3 264 392**

(73) Proprietor: **FUKUSHIMA RUBBER CO. LTD.**
**28, Azadomae**
**Miyashiro Fukushima-shi (JP)**
Proprietor: **THE TOYO RUBBER INDUSTRY CO., LTD.**
**17-18, 1-chome, Edobori Nishi-ku**
**Osaka-shi, Osaka 550 (JP)**

(72) Inventor: **Masui, Koji**
**15-3, Azakagamida Kamata**
**Fukushima-shi (JP)**
Inventor: **Anzai, Yasuo**
**44, AzaMatataronai Mizuhara**
**Matsukawa-machi Fukushima-shi (JP)**
Inventor: **Akiyama, Takeshi**
**38, Hohrai-cho**
**Fukushima-shi (JP)**

(74) Representative: **Huntingford, David Ian et al,**
**W.P. THOMPSON & CO. Coopers Building Church Street**
**Liverpool L1 3AB (GB)**

Courier Press, Leamington Spa, England.

## Apparatus and method for preparing flexible diaphragms

The present invention relates to an apparatus and a method for preparing flexible diaphragms to be used for gas meters and the like.

More particularly, the present invention relates to an apparatus and a method for preparing a flexible diaphragm of the type including a top wall having a predetermined shape, e.g. circular or square, a surrounding wall extending downwardly from the periphery of the top wall at an angle of 90° to the top wall or at an angle larger than 90° to the top wall, and a flange extending from the periphery of the surrounding wall at an angle of at least 90° to the surrounding wall, usually in a plane parallel to the top wall.

A diaphragm having the above-mentioned structure including a top wall, a surrounding wall and a flange is well known, and various methods and apparatuses for forming such diaphragms have been proposed in many countries in the world. These known methods and apparatuses have merits and demerits but they are all still deficient in some way or another.

The conventional methods and apparatuses can be roughly divided into two types. A typical example of one type is disclosed in the specification of Belgian Patent BE—A—804,793 (Toyo Rubber Ind. Co. Ltd., Tokyo). According to this known technique, a diaphragm membrane cut into a predetermined shape is placed to cover a mould shaped to provide a desired configuration and each peripheral side of the membrane is stretched so that the membrane is closely applied to the mold as uniformly as possible. Then, the respective peripheral sides of the diaphragm membrane are fixed and the membrane is subjected to heat treatment in this state, whereby a heat-shrinkable cloth contained in the diaphragm membrane is shrunk and, simultaneously, a rubber layer of the diaphragm membrane is vulcanized. A diaphragm having a configuration corresponding to the configuration of the mold is thereby formed.

The known method and apparatus of the other type are disclosed in the specification of British Patent No. 1,328,991 (E. J. O. Wilison and M. H. Elson). According to this known technique, when a diaphragm membrane is closely applied to a mould shaped to provide a desired configuration, the peripheral sides of the diaphragm membrane are fixed to the mould so that air tightness is maintained between the peripheral edges of the diaphragm membrane and parts of the mould. Air present in the space defined by the mould and the diaphragm membrane in the portion inwardly of the peripheral sides is removed by suction, and the membrane is more stretched in the latter, inner portion than in the peripheral portion so that the membrane is closely applied to the cavity of the mould. In this state, the diaphragm membrane is heated and vulcanized to obtain a diaphragm having a desired configuration.

The method and apparatus of the first mentioned known type are defective in that the operation of applying the diaphragm membrane closely to the mould in agreement with the configuration thereof is very troublesome and time consuming, and the quality of the end product is influenced by the variations in the skill of the workman so that the resulting products are not of uniform quality. The method and apparatus of the former type, however, are advantageous in that even if a diaphragm, prepared according to this known technique, is incorporated in a gas meter and used for a long time, changes, especially changes of the configuration and dimensions which cause metering errors, are very small with the lapse of time. More specifically, according to the method and apparatus of the former type, since the diaphragm membrane is first applied closely to the mould along the concave and convex surface thereof and then stretched and the diaphragm membrane is subjected to heat treatment in this state, the top wall, surrounding wall and flange are constructed substantially independently from the portions of the membrane corresponding these respective areas thereof, and hence there is hardly any stress, resulting from the tension applied to the membrane during the moulding operation, left in the resulting moulded diaphragm. Accordingly, if this diaphragm is used for metering the gas so as to be caused to come into contact with active ingredients of the gas, the shape or configuration of the membrane hardly changes even if the diaphragm is used for metering the gas for a long time. Thus, the original configuration and dimensions can be maintained and metering errors are not made.

In the method and apparatus of the latter type, the operation of attaching a diaphragm membrane to the mould can be accomplished mechanically with ease. However, since the membrane spread in a two-dimensional manner is forcibly arranged in agreement with the mould having a three-dimensional configuration, a large tensile stress is applied to the membrane during the moulding step. According to the method and apparatus of this type, since the diaphragm membrane is heat-treated in this state to cause a thermal shrinkage in a fibrous fabric in the membrane, in the resulting diaphragm, tensile stresses are left in the respective membrane portions. Accordingly, when the resulting diaphragm is used in a gas meter, the configuration and dimensions of the diaphragm can change in a relatively short time. Therefore, the diaphragm prepared according to the method and apparatus of the latter type is unsatisfactory in that the durability is relatively poor, though this diaphragm is advantageous in that it can be prepared relatively easily.

As is seen from the foregoing illustration, the conventional methods and apparatuses for preparing diaphragms have merits and demerits but they are still deficient in some way or another.

The present invention seeks to mitigate the above-mentioned defects of diaphragms prepared according to the aforegoing conventional methods and apparatuses.

From German Patent Specification DE—C—387,306, it is known to hold together the two relatively pivotable halves of a chill mould by means of electromagnetism whereby deactivation of the electric field enables the two halves of the mould to be easily separated.

In accordance with a first aspect of the present invention, there is provided an apparatus for the formation of flexible diaphragms having a configuration which includes a top wall of predetermined shape, a surrounding wall extending from the periphery of the top wall and a flange extending from the periphery of the surrounding wall, said apparatus including a pressure-receiving mould having top, surrounding and flange faces formed to impart said configuration to a diaphragm prepared by that mould, and a pressing mould adapted to be mated with said pressure-receiving mould in the region of said flange face for gripping therebetween the flange-forming portion of a diaphragm forming membrane, the apparatus being characterised in that a first magnet is carried by the pressing mould for selectively holding together with a predetermined force the pressure-receiving and pressing moulds in their mated condition, the pressure-receiving mould being adapted to be selectively held on a stand by means of a second magnetic force provided by an electromagnet carried by the stand, and, in order to facilitate automatic and precise handling of the mould halves, particularly when they are brought together to grip the diaphragm therebetween, the pressing mould is selectively connectible to a displaceable pressing mould lifting device by means of a third magnetic force provided by an electromagnet carried by the displaceable pressing mould lifting device, the magnetic force ($f_{24}$) of the mould connecting magnet, the magnetic force ($f_8$) of the electromagnet for lifting the pressing mould and the magnetic force ($f_7$) of the electromagnet for locating the pressure-receiving mould satisfying the relationship:

$$f_{24}+f_{g.14}<f_8<f_7+f_{g.13}+f_{g.1}$$

where $f_{g.14}$ is the weight of the pressing mould, $f_{g.13}$ is the weight of the pressure receiving mould and $f_{g.1}$ is the weight of the diaphragm.

The present arrangement facilitates the automatic and precise handling of the mould halves, particularly when they are brought together to grip the diaphragm therebetween.

In accordance with a second aspect of the invention, there is provided a method for the preparation of flexible diaphragms utilizing the aforegoing apparatus, the method comprising applying to the pressure-receiving mould a diaphragm-constituting membrane so that the membrane is stretched over the top, surrounding and flange faces of the pressure-receiving mould, the membrane being made from a heat-shrinkable cloth having a rubber outer layer, and gripping a flange-forming portion of the membrane between the flange-forming parts of the pressure-receiving and pressing moulds, the method being characterised by the latter moulds being held together by the magnetic force of the first magnet, subjecting the diaphragm-constituting membrane to heat treatment in this stage to cause the heat-shrinkable cloth of the membrane to thermally shrink about the configuration of the pressure-receiving and pressing moulds and to cause vulcanization of the rubber layer, and thereafter separating the pressure-receiving and pressing moulds and withdrawing the moulded diaphragm thus formed, the arrangement being such that, whenever the pressure-receiving and pressing moulds are mated or separated, the pressure-receiving mould is held on the stand by the magnetic force ($f_7$) of the electromagnet carried by the stand, the weight of the pressure receiving mould and the weight of the diaphragm and the pressing mould is held to the lifting device by the magnetic force ($f_8$) of the electromagnet carried by the lifting device, whereby to obtain automatic and precise alignment of the pressure-receiving and pressing moulds when they are brought together to grip the diaphragm therebetween

Thus, in the present method, the top wall and surrounding wall of the diaphragm are not directly gripped between mating faces of the pressure-receiving and pressing moulds. Instead, only that portion of the membrane which is to form the flange part of the final diaphragm is gripped between the moulds.

Preferably the aforesaid method includes the steps, that the combined pressure-receiving and pressing moulds are placed on the stand at a predetermined position in the region of the magnetic field of the electromagnetic device, the magnetic force of which is effective to hold rigidly the pressure-receiving mould, the lifting device for the pressing mould is then brought down so as to bring the electromagnet carried thereby into contact with the pressing mould, the latter electromagnetic then being energised to attract the pressing mould thereto to separate the pressing mould from the pressure-receiving mould and to maintain the pressing mould stationary in this lifted state, and when a diaphragm-constituting membrane is applied to the pressure-receiving mould for the next cycle of the manufacture, the pressing mould is returned to its original position by the lifting device so that the pressing mould is precisely registered with the pressure-receiving mould, whereby when the moulds are mated with each other, a troublesome, hitherto necessary manual operation is obviated.

The use of the magnet to hold together the pressure receiving and pressing moulds during the heat treatment step has the advantage that uniform magnetic forces are applied to the two moulds and the force applied to the flange-forming portions of the diaphragm-constituting membrane is kept constant, whereby diaphragms of uniform quality can be manufactured.

Advantageously, the moving speed of the lifting device, which is brought down for registering the pressing mould with a pressure-receiving mould, is gradually reduced as the lifting device comes close to the pressure-receiving mould, whereby the diaphragm-constituting membrane is spread on the convex surface of the pressure-receiving mould more precisely and more easily than hitherto.

The present invention is described further hereinafter, by way of example, with reference to the accompanying drawings, in which:—

Figure 1 is a perspective view of a first flexible diaphragm, of known configuration, producable by an apparatus and method in accordance with the present invention;

Figure 2 is a perspective view of a second flexible diaphragm, of known configuration, producable by an apparatus and method in accordance with the present invention;

Figure 3 is a diagrammatic front view of a diaphragm forming apparatus in accordance with the invention;

Figure 4 is a side view of the apparatus of Figure 3;

Figure 5 is a sectional front view of a moulding device for an apparatus in accordance with the invention;

Figure 6 is a plan view from above of the pressure-receiving mould of Figure 5;

Figure 7 is a front view of the pressure receiving mould of Figure 6;

Figure 8 is a sectional view of the pressure receiving mould on the line VIII—VIII in Figure 6;

Figure 9 is a plan view from above of another embodiment of pressure receiving mould;

Figure 10 is a sectional view of the pressure receiving mould of Figure 9 taken on the line X—X of Figure 9;

Figure 11 is a plan view of a pressing mould for an apparatus in accordance with the invention;

Figure 12 is a front view of the pressing mould of Figure 11;

Figure 13 is a front view of another embodiment of pressing mould; and

Figure 14 is a diagrammatic sectional view through a membrane from which a diaphragm is to be formed.

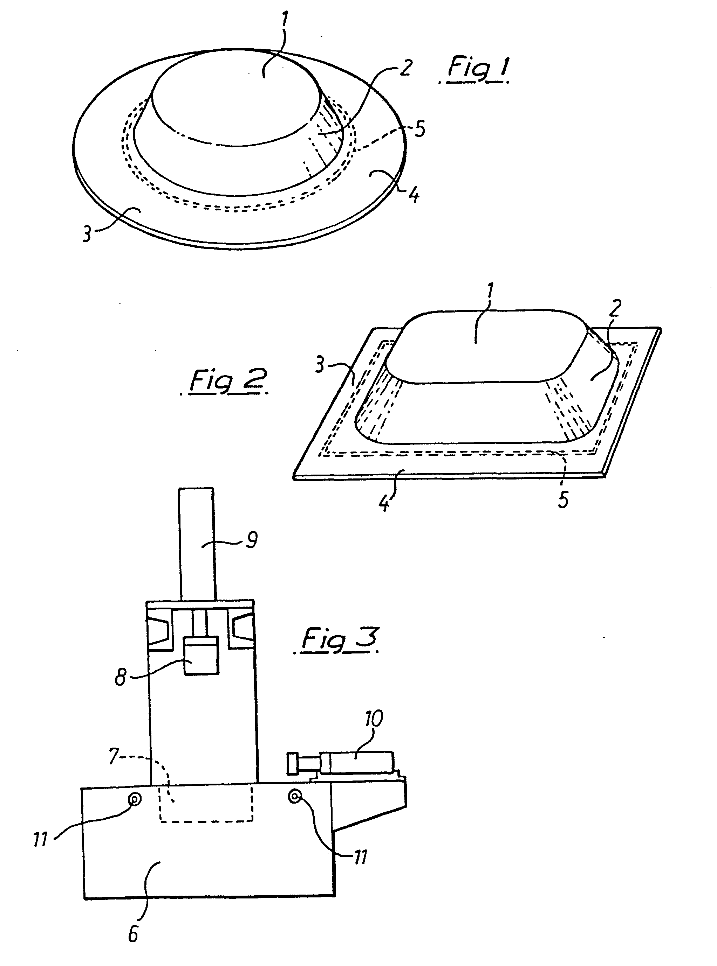

Figure 3 is a perspective front view illustrating an apparatus for preparing diaphragms according to the present invention (moulds are not shown), and in Figure 3, reference numerals 6 and 7 identify a locating stand and an electromagnet device for fixing a pressure-receiving mould at a predetermined position. Reference numeral 8 identifies an electromagnet device for holding a pressing mould, the electromagnet device 8 being connected to a pressing mould lifting device 9 which can move in the vertical direction. Reference numeral 10 identifies a pusher device which is drivable in a direction laterally of the mould for displacing combined pressure-receiving and pressing moulds away from the locating stand 6. Reference numerals 11 identify push button switches for driving and stopping the apparatus.

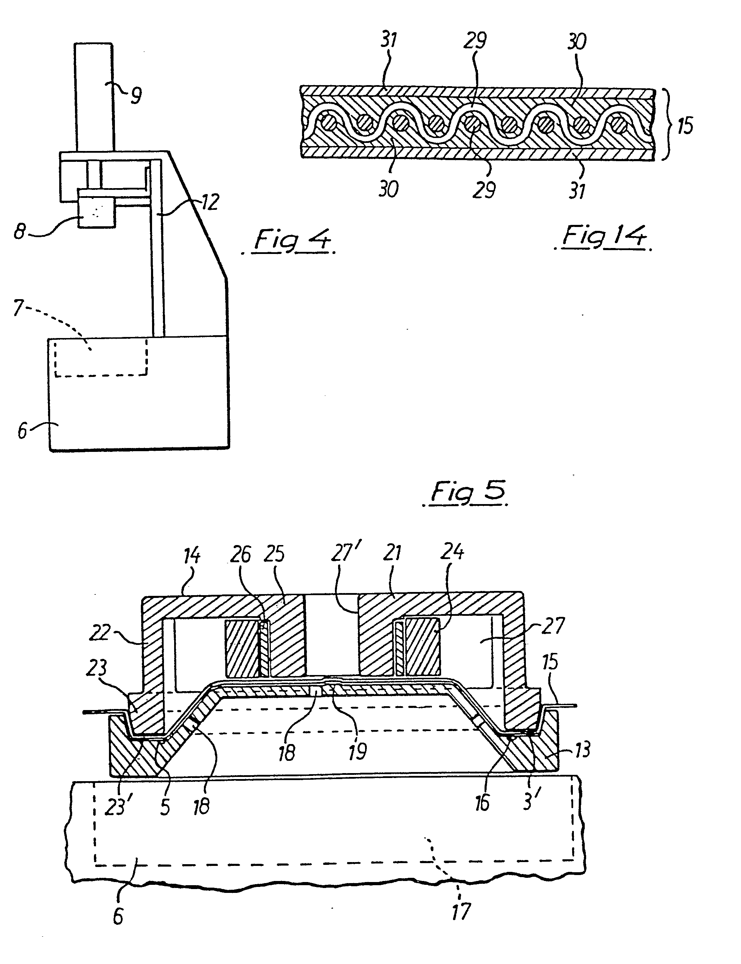

Figure 4 is a side view illustrating the apparatus shown in Figure 3 (the pusher device 10 shown in Figure 3 is omitted). In Figure 4, reference numeral 12 identifies a guide forming part of the lifting device 9.

Figure 5 is a sectional front view showing the condition where a pressure-receiving mould, to which a diaphragm-constituting membrane is applied, is combined with a pressing mould. In Figure 5, reference numerals 13, 14 and 15 identify the pressure-receiving mould, the pressing mould and a diaphragm-constituting membrane, respectively.

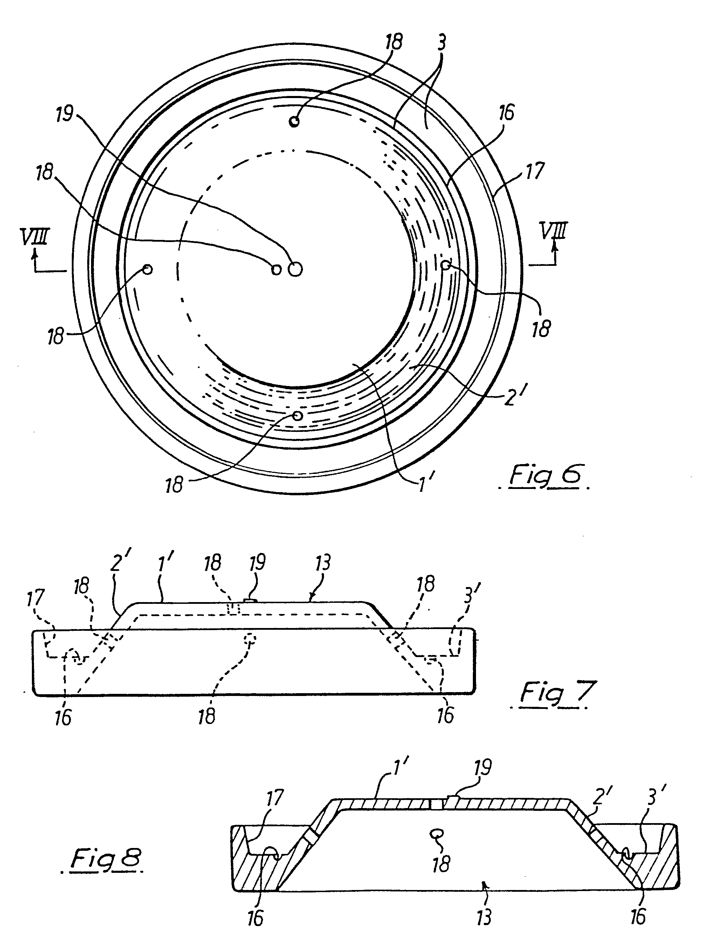

The pressure-receiving mould 13 (see also Figure 7) in the present embodiment has a circular configuration as shown in Figure 6, and has a top face 1', a surrounding face 2' and a flange face 3' corresponding to the top wall 1, surrounding wall 2 and flange 3 of the resulting diaphragm, respectively.

A gasket groove 16 for receiving therein an unvulcanized rubber gasket 5 is formed on the flange surface 3' to surround the top face 1' concentrically, and a substantially vertical wall 17 is formed on the periphery of the flange face 3'. The underside face of the pressure-receiving mould 13 is removed to form a convex recess, whereby the speed of conduction of the heat to the top face 1' and surrounding face 2' is increased.

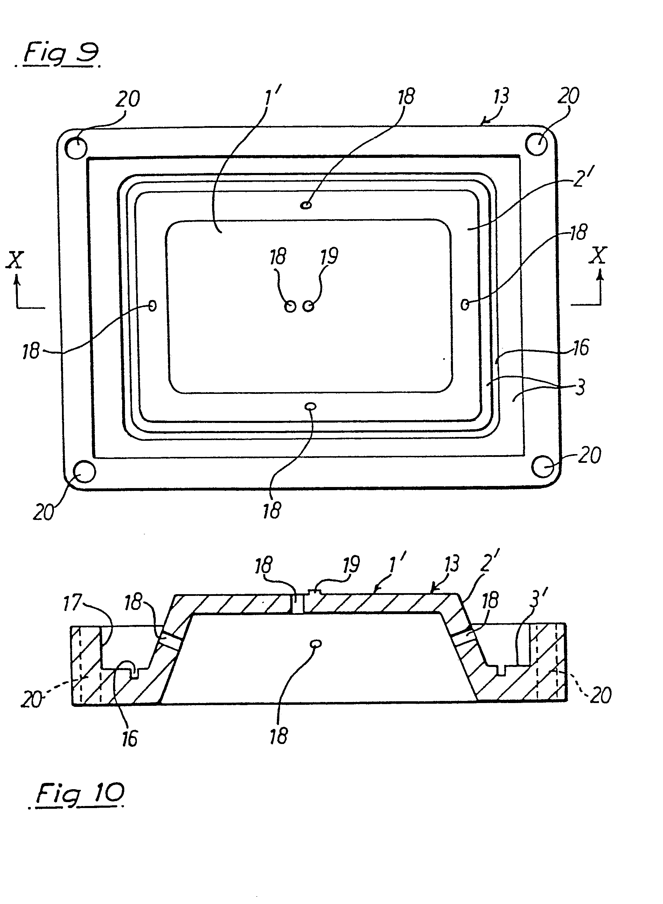

Figure 7 is a front view of the pressure-receiving mould shown in Figure 6 and Figure 8 is a view showing the section taken along the line VIII—VIII in Figure 6. Air escape holes 18 are formed on the top face 1' and surrounding face 2' of the pressure-receiving mould 13, so that when a diaphragm-constituting membrane 15 is applied to the pressure-receiving mould 13, air is not included between the membrane 15 and the mould 13. A projection 19 is formed at the centre of the top face 1' so that a mark of the position of a hole to be formed on the top wall 1 of the diaphragm on attachment of the diaphragm to a metering device is provided during the diaphragm-forming step.

Figure 9 illustrates another embodiment of the pressure-receiving mould which is different from the above-described pressure-receiving mould in that the top face 1' has a rectangular shape. Figure 10 is a view showing the section taken along the line X—X in Figure 9. Reference numerals 20 identify insertion holes for pins which stop the movement of the diaphragm-constituting membrane prior to mating of both the mould halves so as to uniformly stretch the membrane when the membrane is applied to the pressure-receiving mould 13 and is pressed by the pressing mould 14.

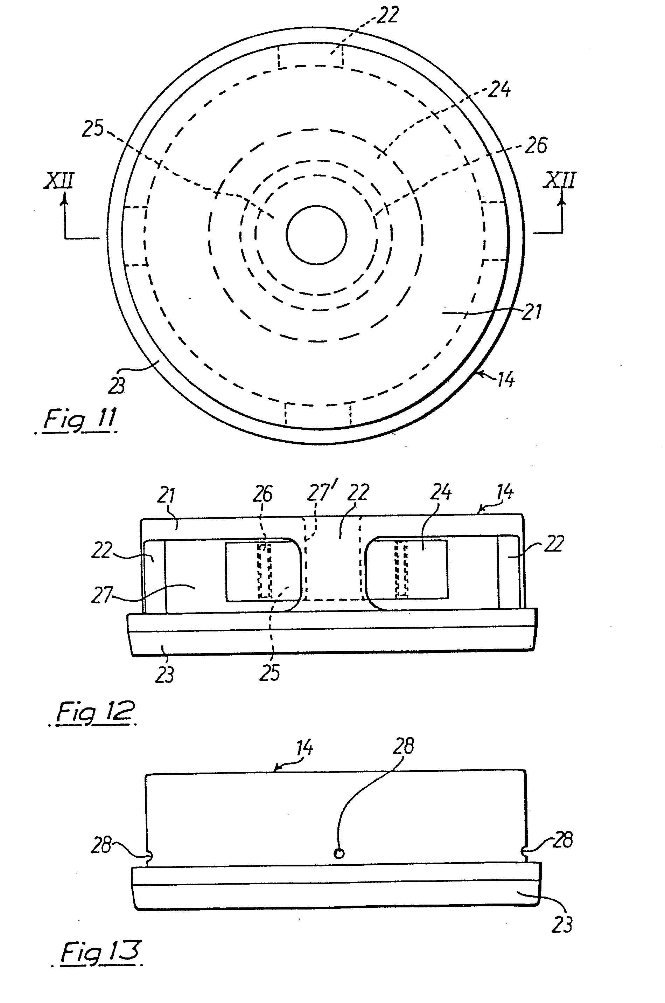

Figure 11 and 12 are plan and front views showing one embodiment of a pressing mould in accordance with the present invention.

Referring to Figures 11 and 12, a disc-like upper yoke 21 has four legs 22 which extend from the periphery of the yoke 21, a ring 23 being mounted on the other end of the legs 22 for applying force to the flange face 3' of the pressure-receiving mould 13. A hollow cylinder 25 projects from the central region of the upper yoke 21 in a direction parallel to the legs 22, so that an angular mould-connecting magnet 24 can be attached to the hollow cylinder 25. After the mould-connecting magnet 24 is fitted in the cylinder 25, solder 26 is inserted into a clearance defined by the outer wall of the cylinder 25 and the inner wall of the magnet 24 to fix the magnet 24 in position. It is preferred that a relation satisfying the requirement represented by the following formula be established between the magnetic forces of the mould-connecting magnet 24, the electromagnet device 7 for fixing the pressure-receiving mould and the electromagnet device 8 for attracting the pressing mould:

$$f_{24}+f_{g.14}<f_8<f_7+f_{g.13}+f_{g.1}$$

wherein $f_{24}$ stands for the magnetic force of the mould-connecting magnet, $f_8$ stands for the magnetic force of the electromagnet device for attracting the pressing mould, $f_7$ stands for the magnetic force of the electromagnet device for fixing the pressure-receiving mould $f_{g.14}$ is the weight of the pressing mould 14, $f_{g.13}$ is the weight of the pressure-receiving mould 13 and $f_{g.1}$ is the weight of the diaphragm.

The outer face of the ring 23 fixed to the ends of the legs 22 is fitted to the vertical wall 17 of the pressure-receiving mould 13 in a socket-spigot joint-like manner, so that the formation of wrinkles is prevented in the diaphragm-constituting membrane, which is applied to and stretched over the pressure-receiving mould. Reference numerals 27 and 27' represent notches formed mainly for decreasing the weight of the pressing mould. The pressing mould may be formed to have a cap-like shape as shown in the front view of Figure 13. If such shape is given to the pressing mould, it is preferred that some through-holes 28 are formed in order to enable circulation of air.

A preferred method and apparatus in accordance with the present invention is that in which a diaphragm-constituting membrane 15 having a section shown in Figure 14 is applied to the pressure-receiving mould 13 described hereinbefore, this pressure-receiving mould 13 is mated with the above-mentioned pressing mould 14 and the membrane 15 is then subjected to a heat treatment in hot air while the flange-forming portion of the membrane 15 is kept in the pressed state. The preferred embodiment of the present invention will now be described in detail.

Ordinarily, the top wall of the diaphragm is flat. In other words, the top face of the pressure-receiving mould is ordinarily flat. However, the method and apparatus of the present invention may be applied to the manufacture of diaphragms having an arcuate face as the top wall face. Furthermore, in a diaphragm prepared according to the present invention, the surrounding wall and top wall ordinarily have a conical or pyramid shape. Of course, the side face of the cone or pyramid may be arcuate to some extent. In this case, the surrounding face of the pressure-receiving mould is formed to have an arcuate shape. It is preferred for the diaphragm to have a flange which extends in a plane parallel to the top wall. However, the present invention may be effectively applied to the preparation of a diaphragm having a flange having a somewhat arcuate face. As is seen from the foregoing illustration, the term "flexible diaphragm" used in the present invention is a generic term and by this term is meant any pan-type or hat-type diaphragm having a configuration including a top wall having a flat or arcuate face, a surrounding wall having a flat or arcuate face, which extends from the periphery of the top wall, and a flange having a flat or arcuate face, which extends from the periphery of the surrounding wall.

The method for preparing diaphragm by using the above described moulding apparatus will now be described in detail.

As shown in Figure 14, the diaphragm-constituting membrane normally used in the present technique comprises a base fabric formed by weaving or knitting from so-called heat-shrinkable fibres 29, such as polyester fibres, which have a property of shrinking when heated to a predetermined temperature and layers 31 of an oil-resistant rubber such as acrylonitrile rubber or epichlorohydrin rubber, which are ordinarily formed on both surfaces of the base fabric by an adhesive layer 30. This diaphragm-constituting membrane 15 is cut into a predetermined size and, as shown in Figure 5, the membrane 15 is placed on the pressure-receiving mould 13 fixed on the stand 6 by the fixing electromagnet device 7. Prior to this application of the membrane 15, the pressing mould 14 to be mated with the pressure-receiving mould 13 is held by the pressing mould-attracting electromagnet device 8 and maintained stationary in its raised position. An unvulcanized rubber gasket 5 is packed in the gasket groove 16 of the pressure-receiving mould 13.

The pressing mould 14 attracted to the pressing mould-attracting electromagnet device 8 of the pressing mould lifting device 9 is then brought down onto the pressure-receiving mould 13. The speed of this downward movement of the pressing mould 14 is gradually reduced as the pressing mould 14 is brought close to the pressure-receiving mould 13. Finally, the end face 23' of the ring 23 of the pressing mould 14 is pressed onto the flange face 3' of the pressure-receiving mould 13 by way of the diaphragm-constituting membrane 15. At this stage, the lower end faces of the hollow cylinder 25 of the pressing mould 14 and the mould-connecting magnet 24 are located in close proximity to the surface of the diaphragm-constituting membrane 15 spread on the top face 1' of the pressure-receiving mould 13, but they are prevented from actually coming into engagement with the surface of the membrane 15 by virtue of a slight clearance formed therebetween. It is preferred that this clearance be about 0.3 to 0.5 mm.

When the pressing mould 14 is thus mated with the pressure-receiving mould 13 in such a manner that the flange-forming portion of the diaphragm-constituting membrane 15 is gripped between the two moulds, reverse excitation is caused in the pressing mould-attracting electromagnet device 8 so that the polarities of both the electrodes are instantaneously reversed. The application of current is then stopped so that the pressing mould lifting device 9 is alone raised up, being separated from the pressing mould 14. The lifting device is stopped at a predetermined position.

Reverse excitation is also affected instantaneously in the receiving mould-fixing electromagnet device 7 in the same manner as described above, and the application of current to the electromagnet is then stopped.

When the above operations of reverse excitation have been completed, the pressure-receiving mould 13 and the pressing mould 14 remain connected to each other by the magnetic force of the mould-connecting magnet 24 disposed in the pressing mould 14, strictly speaking, by this magnetic force and the weight of the pressing mould.

The pusher device 10 is then actuated to feed another pressure-receiving mould onto the locating stand 6 and simultaneously to push out the mated moulds onto a conveyor device (not shown) for guiding the mated moulds into a chamber filled with hot air; the pusher device 10 is then returned to its original position. The pair of the moulds 13 and 14 thus pushed out are heat-treated for a predetermined time in this hot air chamber maintained at a predetermined temperature. During this heat treatment, the flange-forming portion of the diaphragm-constituting membrane 15 is gripped between the pressure-receiving mould 13 and the pressing mould 14, the membrane 15 being prevented from moving freely in this state by the magnetic force of the magnet 24. Accordingly, the membrane 15 is shrunk along the top face 1' and surrounding face 2' of the pressure-receiving mould 13, with the result that the top wall 1, surrounding wall 2 and flange 3 of the diaphragm are formed precisely according to the configuration of the mould 13; simultaneously, the gasket 5 is attached to one surface of the flange 3 integrally therewith. After termination of the heat treatment, the mated pressure-receiving and pressing moulds 13 and 14, together with the moulded diaphragm-constituting membrane 15 are transported by the above-mentioned conveyor device to a position within the stroke path of the pusher device 10, and the moulds 13 and 14 are displaced by the pusher device 10. At this stage, the pair of mated moulds to which a diaphragm-constituting membrane 15 has been attached are placed on the locating stand 6, and the magnetic forces of both the electromagnet devices 7 and 8 are released, the pressing mould lift device 9 being held at the elevated position. Accordingly, the paired moulds which have been subjected to the heat treatment are replaced by fresh mated moulds on the stand 6. When the pair of the heat-treated moulds are placed at a predetermined position on the stand 6, the pressure-receiving mould-holding electromagnet device 7 is actuated to fix the pressure-receiving mould 13 onto the stand 6. Then, the pressing mould lifting device 9 is actuated and brought down onto the stand 6 and, as soon as the pressing mould-attracting electromagnet device 8 comes into contact with the pressing mould 14, the lifting device 9 is stopped and current is applied to the electromagnet device 8 to excite the electromagnet device 8. Since these three magnets, that is, the pressure-receiving mould-fixing electromagnet device 7, the magnet 24 fixed to the pressing mould 14 and the pressing mould-attracting electromagnet device 8, are arranged to satisfy the requirement defined by the above-mentioned formula, when the pressing mould lifting device 9 is driven and raised up, the pressing mould-attracting electromagnet device 8 separates the pressing mould 14 from the pressure-receiving mould 16, and the electromagnet device 8 is raised up and stopped at the original position. Then, the diaphragm 4 covering the pressure-receiving mould 13 is peeled off from the mould 13, and ordinarily, the portion outside the gasket 5 is cut off. Thus, the final diaphragm is obtained.

Then, in the same manner as described hereinbefore, a rubber gasket 5 is packed in the groove 16 of the above-mentioned pressure-receiving mould 13, and a fresh diaphragm-constituting membrane 15 is uniformly spread on the pressure-receiving mould 13. The pressing mould lifting device 9 is then driven to bring down the pressing mould 14 and the mould 14 is mated with the pressure-receiving mould 13. Since the pressing mould lifting device 9 is moved downwards precisely along the vertical axis by the guide 12, the elevated pressing mould 14 is returned from the position separated from the pressure-receiving mould 14 and both the moulds 13 and 14 are precisely mated with each other without any error. Accordingly, the diaphragm-constituting membrane 15 is uniformly stretched and is closely held to the pressure-receiving mould 13 with the flange-forming portion of the membrane 15 gripped in the same manner as described hereinbefore.

The method and apparatus for preparing diaphragms according to the present invention have been described with reference to illustrated embodiments thereof, but it must be understood that modifications and variations may be made without departing from the scope of the appended claims. For example, the sectional configuration of the gasket 5 is not particularly critical in the present invention. For instance, a diaphragm in which, as disclosed in the above-mentioned specification of Belgian Patent BE—A—804,793, the entire face of the gasket that confronts the diaphragm-constituting membrane is not stuck to the membrane, that is, the inner circumferential side of the gasket, i.e., a part near the surrounding wall, is not stuck to the diaphragm-constituting membrane but is independent from the diaphragm-constituting membrane, can be effectively made according to the method and apparatus of the present invention.

## Claims

1. An apparatus for the formation of flexible diaphragms having a configuration which includes a top wall (1) of predetermined shape, a surrounding wall (2) extending from the periphery of the top wall (1) and a flange (3) extending from the periphery of the surrounding wall (2), said apparatus including a pressure-receiving mould (13) having top (1'), surrounding (2') and flange (3') faces formed to impart said configuration to a diaphragm prepared by that mould, and a pressing mould (14) adapted to be mated with said pressure-receiving mould (13) in the region of said flange face (3') for gripping therebetween the flange forming portion of a diaphragm forming membrane, the apparatus being characterised in that a first magnet (24) is carried by the pressing mould (14) for selectively holding together with a predetermined force the pressure-receiving and pressing moulds (13, 14) in their mated condition, the pressure-receiving mould (13) being adapted to be selectively held on a stand (6) by means of a second magnetic force provided by an electromagnet (7) carried by the stand (6), and, in order to facilitate automatic and precise handling of the mould halves (13, 14), particularly when they are brought together to grip the diaphragm therebetween, the pressing mould is selectively connectible to a displaceable pressing mould lifting device (9) by means of a third magnetic force provided by an electromagnet (8) carried by the displaceable pressing mould lifting device (9), the magnetic force $(f_{24})$ of the mould connecting magnet (24), the magnetic force $(f_8)$ of the electromagnet (8) for lifting the pressing mould (14) and the magnetic force $(f_7)$ of the electromagnet (7) for locating the pressure-receiving mould (13) satisfying the following relationship:

$$f_{24}+f_{g.14}<f_8<f_7+f_{g.13}+f_{g.1}$$

where $f_{g.14}$ is the weight of the pressing mould (14), $f_{g.13}$ is the weight of the pressure receiving mould (13) and $f_{g.1}$ is the weight of the diaphragm.

2. A method for the preparation of flexible diaphragms utilizing the apparatus of claim 1, comprising applying to the pressure-receiving mould (13) a diaphragm-constituting membrane (15) so that the membrane (15) is stretched over the top (1'), surrounding (2') and flange (3') faces of the pressure-receiving mould (13), the membrane (15) being made from a heat-shrinkable cloth (29) having a rubber outer layer (31), and gripping a flange-forming portion of the membrane (15) between the flange-forming parts of the pressure-receiving and pressing moulds (13, 14), the method being characterised by the latter moulds (13, 14) being held together by the magnetic force of the first magnet (24), subjecting the diaphragm-constituting membrane (15) to heat treatment in this stage to cause the heat-shrinkable cloth (29) of the membrane to thermally shrink about the configuration of the pressure-receiving and pressing moulds (13, 14) and to cause vulcanisation of the rubber layer (31), and thereafter separating the pressure receiving and pressing moulds (13, 14) and withdrawing the moulded diaphragm thus formed, the arrangement being such that, whenever the pressure-receiving and pressing moulds (13, 14) are mated or separated, the pressure receiving mould (13) is held on the stand (6) by the magnetic force $(f_7)$ of the electromagnet (7) carried by the stand (6), the weight of the pressure-receiving mould (13) and the weight of the diaphragm (1), and the pressing mould (14) is held to the lifting device (9) by the magnetic force $(f_8)$ of the electromagnet (8) carried by the lifting device (9), whereby to obtain automatic and precise alignment of the pressure-receiving and pressing moulds (13, 14) when they are brought together to grip the diaphragm therebetween.

3. A method as claimed in claim 2 wherein the combined pressure-receiving and pressing moulds (13, 14) are placed on the stand (6) at a predetermined position in the region of the magnetic field of the electromagnetic device (7), the magnetic force of which is effective to hold rigidly the pressure-receiving mould (13), the lifting device (9) for the pressing mould (14) is then brought down so as to bring the electromagnet (8) into contact with the pressing mould (14) and the electromagnet (8) carried is then energised to attract the pressing mould (14) thereto to separate the pressing mould (14) from the pressure-receiving mould (13) and to maintain the pressing mould (14) stationary in this lifted state, and when a diaphragm-constituting membrane (15) is applied to the pressure-receiving mould (13) for the next cycle of the manufacture, the pressing mould (14) is returned to its original position by the lifting device (9) so that the pressing mould (14) is precisely registered with the pressure-receiving mould (13).

**Patentansprüche**

1. Apparatur zur Bildung flexibler Diaphragmen mit solcher Form, daß sie eine obere Wandung (1) mit vorher festgelegter Form, eine sich vom Umfang der oberen Wandung her ausdehnende umlaufende Wandung (2) und einen sich von letzterer her erstreckenden Flansch (3) umfassen, wobei die Apparatur eine Druck aufnehmende Preßform (13) mit einer Oberseitenfläche (1'), einer umlaufenden Wandfläche (2') und einer Flanschfläche (3'), die jeweils so ausgebildet sind, daß sie einem mittels dieser Preßform hergestellten Diaphragma die angegebene Form geben, sowie ein Preßwerkzeug (14) umfaßt, das so ausgebildet ist, daß es in der Arbeitsstellung im Bereich der Flanschfläche (3') genau auf die Preßform (13) paßt, um zwischen beiden den flanschbildenden Teil der ein Diaphragma bildenden Membran zu greifen, dadurch gekennzeichnet, daß das Preßwerkzeug (14) einen ersten Magneten (24) trägt, um mit einer vorher festgesetzten Kraft die Preßform und das Preßwerkzeug (13, 14) in ihrer Arbeitsstellung selektiv zusammenzuhalten, wobei die Preßform (13) so ausgelegt wird, daß sie auf einer Unterlage (6) mittels einer zweiten magnetischen Kraft selektiv gehalten wird, die von einem Elektromagneten (7) geliefert wird, den die Unterlage (6) trägt, und, zur Erleichterung eines automatischen und präzisen Arbeitens mit den beiden Hälften der Preßform, insbesondere dann, wenn sie zusammengebracht werden, um das zwischen ihnen befindliche Diaphragma zu halten, das Preßwerkzeug selektiv mit einer verschiebbaren Preßwerkzeug-Hebevorrichtung (9) mittels eines dritten magnetischen Kraft verbunden werden kann, die von einem Elektromagneten (8) geliefert wird, den die Preßwerkzeug-Hebevorrichtung (9) trägt, wobei die magnetische Kraft ($f_{24}$) des die Preßformhälften verbindenden Magneten (24), die magnetische Kraft ($f_8$) des Elektromagneten (8) zum Anheben des Preßwerkzeugs (14) und die

magnetische Kraft ($f_7$) des Elektromagneten (7) zur Fixierung der Preßform (13) an Ort und Stelle die folgende Beziehung erfüllen

$$f_{24}+f_{g.14}<f_8<f_7+f_{g.13}+f_{g.1}$$

worin $f_{g.14}$ das Gewicht des Preßwerkzeugs (14), $f_{g.13}$ das Gewicht der Preßform (14) und $f_{g.1}$ das Gewicht des Diaphragmas sind.

2. Verfahren zur Herstellung flexibler Diaphragmen unter Benutzung der Apparatur nach Anspruch 1, bei dem eine das Diaphragma bildende Membran (15) so auf die Preßform (13) aufgebracht wird, daß die Membran (15) über die Oberseitenfläche (1'), die umlaufende Wandfläche (2') und die Flanschfläche (3') der Preßform (13) gestreckt wird, wobei die Membran (15) aus einem in der Wärme schrumpffähigen Gewebe (29) mit einer äußeren Schicht aus Gummi (31) hergestellt ist, und ein den Flansch bildender Teil der Membran (15) zwischen den flanschbildenden Teilen der Preßform und des Preßwerkzeugs (13, 14) gegriffen wird, dadurch gekennzeichnet, daß die beiden letzteren Teile der Form (13, 14) durch die magnetische Kraft des ersten Magneten (24) zusammengehalten werden, die das Diaphragma bildende Membran (15) in diesem Stadium einer Wärme-Behandlung unterzogen wird, um ein thermisches Schrumpfen des in der Wärme schrumpffähigen Gewebes (29) der Membran um das den Druck aufnehmende und das den Druck abgebende Formwerkzeug (13, 14) herum zu bewirken sowie die Vulkanisation der Gummi-Schicht (31) zu bewirken, und danach die beiden Formwerkzeuge (13, 14) getrennt werden und das auf diese Weise gebildete Diaphragma entnommen wird, wobei die Anordnung eine solche ist, daß beim Zusammenbringen oder beim Trennen der beiden Formwerkzeuge (13, 14) die den Druck aufnehmende Preßform (13) auf der Unterlage (6) durch die magnetische Kraft ($f_7$) des von der Unterlage (6) getragenen Elektromagneten (7) gehalten wird, das Gewicht der den Druck aufnehmende Preßform (13) und das Gewicht des Diaphragmas (1) und des Preßwerkzeugs (14) an der Hebevorrichtung (9) durch die magnetische Kraft ($f_8$) des von der Hebevorrichtung (9) getragenen Elektromagneten (8) gehalten wird, wodurch eine automatische und präzise Ausrichtung der beiden Formwerkzeuge (13, 14) zueinander erzielt wird, wenn sie zusammengebracht werden, um das zwischen ihnen befindliche Diaphragma zu greifen.

3. Verfahren nach Anspruch 3, dadurch gekennzeichnet, daß die vereinigten, den Druck aufnehmenden und abgebenden Formwerkzeuge (13, 14) auf der Unterlage (6) in einer vorher festgelegten Position im Bereich des magnetischen Feldes des Elektromagneten (7) aufgestellt werden, dessen magnetische Kraft groß genug ist, um die Preßform (13) starr festzuhalten, die Hebevorrichtung (9) für das Preßwerkzeug (14) dann abgesenkt wird, so daß der Elektromagnet (8) in Berührung gebracht wird mit dem Preßwerkzeug (14), dieser gehalterte Elektromagnet (8) dann mit Energie gespeist wird, um das Preßwerkzeug (14) anzuziehen und dadurch das Preßwerkzeug (14) und die Preßform (13) voneinander zu trennen und das Preßwerkzeug (14) stationär in diesem angehobenen Zustand zu halten, und nach dem Aufbringen einer das Diaphragma bildenden Membran (15) auf die Preßform (13) für den nächsten Herstellungscyclus das Preßwerkzeug (14) durch die Hebevorrichtung (9) wieder in seine ursprüngliche Position zurückbewegt wird, so daß das Preßwerkzeug (14) in die Arbeitsstellung auf die Preßform (13) präzise aufgepaßt wird.

## Revendications

1. Appareil pour former des diaphragmes flexibles ayant un contour qui comprend une paroi supérieure (I) d'une forme prédéterminée, une paroi circonférentielle (2) s'étendant du pourtour de la paroi supérieure (I) et une bordure (3) s'étendant du pourtour de la paroi circonférentielle (2), ledit appareil comprenant un moule recevant la pression (13) ayant un dessus (1'), un pourtour (2') et une bordure (3') dont les faces sont formées de façon à imposer ledit contour à un diaphragme préparé par ce moule, et un moule de pressage (14) complémentaire dudit moule recevant la pression (13) dans la région de la face de ladite bordure (3') afin de serrer entre eux la partie appelée à former la bordure d'une membrane destinée à former un diaphragme, caractérisé en ce qu'il comprend un premier aimant (24) porté par le moule de pressage (14) afin de tenir sélectivement ensemble, avec une force prédéterminée, le moule recevant la pression et le moule de pressage (13, 14) dans leur position complémentaire, le moule recevant la pression (13) étant adapté à être tenu sélectivement sur un support (6) au moyen d'une seconde force magnétique produite par un électro-aimant (7) porté par le support (6) et pour faciliter une manipulation automatique et précise des deux moitiés (13, 14) du moule, en particulier, quand elles ont été rapprochées pour serrer entre elles le diaphragme, le moule de pressage pouvant être relié sélectivement à un dispositif de levage mobile (9) au moyen d'une troisième force magnétique produite par un électro-aimant (8) porté par le dispositif de levage (9), la force magnétique ($f_{24}$) de l'aimant de liaison du moule (24), la force ($f_8$) de l'électro aimant (8) destinée à lever le moule de pressage (14) et la force magnétique ($f_7$) de l'électro-aimant (7) pour tenir le moule recevant la pression en position satisfaisant à la relation suivante:

$$f_{24}+f_{g.14}<f_8<f_7+f_{g.13}+f_{g.1}$$

où $f_{g.14}$ est le poids du moule de pressage (14), $f_{g.13}$ est le poids du moule recevant la pression (13) et $f_{g.1}$ est le poids du diaphragme.

2. Procédé pour produire un diaphragme flexible en utilisant l'appareil de la revendication 1 qui consiste à appliquer sur un moule recevant le pression (13)· une membrane (15) appelée à constituer un diaphragme de sorte que cette membrane (15) est étirée au dessus des faces (1') du dessus, (2') du pourtour et (3') de la bordure du moule (13) recevant la pression, la membrane (15) étant faite d'un tissu thermorétrécissable (29) comportant une couche extérieure de caoutchouc (31) et, à serrer la partie formant la bordure de la membrane (15) entre les parties correspondantes des moules recevant la pression (13) et de pressage (14) caractérisé en ce que les deux moules (13, 14) sont tenus ensemble par la force magnétique du premier aimant (24) en ce qu'on soumet la membrane constituant le diaphragme (15) à un traitement par la chaleur afin que le tissu thermorétrécissable (29) de la membrane subisse un retrait thermique autour du conteur des moules recevant la pression et de pressage (13, 14) et pour vulcaniser la couche de caoutchouc (31) et en ce que, on sépare ensuite les moules recevant la pression et de pressage (13, 14) et on retire le diaphragme moulé ainsi formé, l'arrangement étant tel que lorsque le moule recevant la pression et le moule de pressage (13, 14) sont fermés ou sont séparés, le moule recevant la pression (13) est tenu sur le support (6) par la force magnétique ($f_7$) de l'électro-aimant (7) porté par ce support (6) par le poids de moule recevant la pression (13) et par celui du diaphragme (1) tandis que le moule de pressage (14) est tenu contre le dispositif de levage (9) par la force magnétique ($f_8$) de l'électro-aimant (8) porté par ce dispositif de levage (9), ce qui fait qu'on obtient un alignement automatique et précis des moules recevant la pression et de pressage (13, 14) quand ils ont été rapprochés affin de serrer le diaphragme entre eux.

3. Procédé selon la revendication 2 dans lequel les moules recevant la pression et de pressage (13, 14) sont placés sur le support (6) à une position prédéterminée dans la région du champ magnétique du dispositif électromagnétique (7) dont la force magnétique est capable de tenir invariablement le moule recevant la pression (13) et où le dispositif de levage (9) du moule de pressage (14) est ensuite abaissé agin d'amener l'électro-aimant (18) en contact avec ledit moule de pressage (14), l'électro-aimant (8), porté par celuici étant ensuite excité pour attirer le moule de pressage (14) afin de séparer ledit moule de pressage (14) du moule recevant la pression (13) et pour maintenir le moule de pressage (14) immobile dans son état levé, et dans lequel, quand une membrane (15) appelée à constituer un diaphragme a été appliquée sur le moule recevant la pression (13) pour le cycle de fabrication suivant, le moule de pressage (14) est ramené à sa position initiale par la dispositif de levage (9) de sorte que le moule de pressage (14) et le moule recevant la pression (13) s'alignent avec précision.

*Fig 1*

*Fig 2*

*Fig 3*

0 021 669

Fig 4.

Fig 14.

Fig 5.

2

_Fig 6_.

_Fig 7_.

_Fig 8_.

_Fig 9_

_Fig 10_

_Fig 11._

_Fig 12._

_Fig 13._